# EUROPÄISCHE PATENTANMELDUNG

(11) **EP 4 589 907 A1**
(43) Veröffentlichungstag der Anmeldung: **23.07.2025**
(21) Anmeldenummer: 25152614.1
(22) Anmeldetag: 17.01.2025
(51) Int. Cl.: H04L 41/0853, H04L 41/0869, H04L 41/0813, H04L 41/0806

(54) **VERFAHREN ZUM BETRIEB EINES SMART METER GATEWAYS MIT MOBILFUNKMODUL**

(30) Priorität: 17.01.2024 DE 102024101273
(71) Anmelder: Theben Smart Energy GmbH, 72401 Haigerloch (DE)
(72) Erfinder: Heumesser, Roland, 72108 Rottenburg (DE); Kapusta, Andreas, 72351 Geislingen (DE); Stehle, Jochen, 72401 Haigerloch (DE)
(74) Vertreter: Westphal, Mussgnug & Partner Patentanwälte mbB

(57) **Zusammenfassung**

Bereitgestellt wird ein Verfahren zum Betrieb eines Smart Meter Gateways (1) mit Mobilfunkmodul (9), wobei das Mobilfunkmodul (9) ein Modem (10) und ein eingebettetes System (11) aufweist, das zum Betrieb eines Netzwerkmanagement-Clients (12) eingerichtet ist, mit welchem das Modem konfiguriert werden kann, und wobei der Smart Meter Gateway (1) einen Prozessor (3), der mit einem Arbeitsspeicher(4) und/oder einem Flashspeicher (5) zusammenwirkt aufweist, um auf einem Betriebssystem (18) eine Applikations-Software (19) zu betreiben, mit der Messdaten ausgelesen und verschlüsselt zur Weiterleitung an den autorisierten Empfänger an das Mobilfunkmodul (9) übergeben werden, wobei auf dem Betriebssystem (18) ferner ein Interfacemanager (20) betrieben wird, mit dem das Modem (10) konfiguriert werden kann, bei dem der Interfacemanager (20) ehe er das Modem (10) konfiguriert überprüft, ob das Modem (10) bereits vom Netz-werkmanagement-Client (12) konfiguriert wurde und nur dann das Modem (10) konfiguriert, wenn dies nicht der Fall ist.

## Beschreibung

Smart Meter Gateways (SMGW) sind die zentralen Komponenten intelligenter Messsysteme. Sie empfangen Messdaten von Zählern, speichern diese und bereiten sie für Marktakteure auf. Dementsprechend dienen sie als zentrale Kommunikationseinheit intelligenter Messsysteme, über die die Kommunikation
- mit dem Lokalen Metrologischen Netz (Local Metrological Network, LMN) mit Verbrauchsmessstellen eines oder mehrerer Verbraucher,
- mit dem Heimnetz (Home Area Network, HAN) des Letztverbrauchers, insbesondere mit steuerbaren Energieverbrauchern oder Energieerzeugern, und
- mit dem Weitverkehrsnetz (Wide Area Network, WAN), insbesondere mit dem SMGW-Administrator und externen Marktteilnehmern
abgewickelt wird.

Smart Meter Gateways unterliegen strengen sicherheitstechnischen Richtlinien. Die Einhaltung dieser Richtlinien muss entsprechend in einem Zertifizierungsprozess des BSI nachgewiesen werden. Dabei werden alle sicherheitskritischen Elemente, welche der Zertifizierung, unterliegen im sogenannten "Target of Evaluation" (TOE) zusammengefasst.

Gemäß dem aktuellen Stand der Technik wird die Anbindung der Netzwerkkommunikation üblicherweise über Mobilfunkmodule außerhalb des TOEs realisiert, da das entsprechende Modem die verschlüsselte Kommunikation, insbesondere die Messwerte und Schaltkommandos nicht manipulieren kann. Die Konfiguration dieser Mobilfunkmodule (also insbesondere die Definition von APN, IP-Version, User, Passwort usw.) erfolgt derzeit aus dem sicheren Bereich des TOE heraus mittels eines Interfacemanager (IfMgr) Softwaremoduls. Der Interfacemanager kommuniziert über eine serielle Verbindung mit modemspezifischen AT-Befehlen, üblicherweise bei der Aktivierung des Modems. Befehle kommen dabei ausschließlich vom Interfacemanager in Richtung Modem.

Ein Problem ergibt sich dabei daraus, dass für den operativen Betrieb der SMGWs die (großen) Messtellenbetreiber insbesondere die Möglichkeit brauchen, die Verbindungsqualität der Mobilfunkanbindung und deren Konfiguration zu überwachen und zu korrigieren. Dementsprechend muss für diese Kommunikationsnetzverwaltung, für die nachfolgend auch der Begriff "Netzwerkmanagement" (NwMgmt) verwendet wird, eine Möglichkeit geschaffen werden, auf die Konfiguration des Mobilfunkmodems Einfluss zu nehmen, ohne die Sicherheit des Smart Meter Gateways zu kompromittieren. Allerdings soll ein ausgelieferter Smart Meter Gateway auch ohne Einbindung in die Kommunikationsnetzverwaltung funktionsfähig sein, so dass eigentlich routinemäßig bei einem Start des Smart Meter Gateways das Modem konfiguriert wird, was aber dann, wenn das Mobilfunkmodul bereits mit seinem Netzwerkmanagement-Client in ein Netzwerkmanagement integriert wurde, zu Inkonsistenzen führen oder diese Integration rückabwickeln kann.

Die durch die Erfindung zu lösende Aufgabe besteht daher darin, ein Verfahren zum Betrieb eines Smart Meter Gateways mit Mobilfunkmodul bereitzustellen, dass das Auftreten derartiger Inkonsistenzen sicher vermeidet. Diese Aufgabe wird gelöst durch ein Verfahren mit den Merkmalen des Patentanspruchs 1. Vorteilhafte Weiterbildungen des Verfahrens sind Gegenstand der abhängigen Ansprüche.

Das erfindungsgemäße Verfahren dient zum Betrieb eines Smart Meter Gateways mit Mobilfunkmodul. Das Mobilfunkmodul weist ein Modem 10 und ein eingebettetes System (embedded system) 11 auf, das zum Betrieb eines Netzwerkmanagement-Clients 12 eingerichtet ist, mit welchem insbesondere das Modem konfiguriert werden kann.

Der mit dem erfindungsgemäßen Verfahren betriebene Smart Meter Gateway weist ferner einen Prozessor auf, der mit einem Arbeitsspeicher und/oder einem Flashspeicher zusammenwirkt, um auf einem Betriebssystem insbesondere eine Applikations-Software zu betreiben, mit der insbesondere Messdaten ausgelesen werden und ein verschlüsselter Kommunikationskanal über Modem und Mobilfunknetz etabliert wird, über den dann die Messwerte und Schaltbefehle an den autorisierten Empfänger übertragen werden.

Um eine solche Übermittlung realisieren zu können, muss das Modem konfiguriert sein, indem insbesondere die Definition von APN, IP-Version, User, Passwort usw. hinterlegt werden. Um diese Konfiguration im Bedarfsfall nach erfolgter Installation vornehmen zu können, wird auf dem Betriebssystem ferner zumindest zeitweise ein Interfacemanager betrieben, mit dem das Modem konfiguriert werden kann. Zumindest zeitweise ist dieser Betrieb, weil wenn sichergestellt ist, dass das Modem konfiguriert ist, der Interfacemanager nicht zwingend weiterlaufen muss, sofern er nicht noch für andere Funktionen genutzt wird.

Wesentlich für das erfindungsgemäße Verfahren ist es, dass der Interfacemanager ehe er das Modem konfiguriert überprüft, ob das Modem bereits vom Netzwerkmanagement-Client konfiguriert wurde und nur dann das Modem konfiguriert, wenn dies nicht der Fall ist. Durch diese vorgeschaltete Überprüfung wird sicher verhindert, dass durch den Interfacemanager eine bestehende Konfiguration verändert wird und somit sichergestellt, dass vom Netzwerkmanagement-Client vorgenommene Einstellungen bestehen bleiben.

Gemäß einer bevorzugten Ausführungsform des Verfahrens wird die vorgeschaltete Überprüfung dadurch realisiert, dass der Netzwerkmanager-Client bei der Konfiguration des Modems einen charakteristischen Parameter setzt und dass der Interfacemanager prüft, ob dieser charakteristische Parameter gesetzt ist.

Bevorzugt kann eine Überprüfung, ob das Modem bereits vom Netzwerkmanagement-Client konfiguriert wurde, einen Abruf der Konfiguration des Modems mit einem AT-Befehl, der ein reiner Lesebefehl ist, umfassen. Diese Vorgehensweise schließt eine Kompromittierung des Smart Meter Gateways durch die Überprüfung so gut wie vollständig aus.

Es hat sich bewährt, wenn der Interfacemanager nach der Aktivierung des Modems eine vorgegebene Zeit, beispielsweise 30 Sekunden, wartet, ehe er mit der Überprüfung beginnt. Dies stellt sicher, dass der Netzwerkmanagement-Client etwaige beim Systemstart regelmäßig durchzuführende Konfigurationsoperationen am Modem abgeschlossen hat, wenn die Überprüfung erfolgt.

Die Erfindung wird nachfolgend anhand von Figuren beispielhaft näher erläutert. Es zeigt:
- Fig. 1:: eine Prinzipdarstellung eines Smart Meter Gateways, auf dem das erfindungsgemäße Verfahren durchgeführt werden kann, und
- Fig. 2:: ein schematisches Ablaufdiagramm einer Ausführungsform des erfindungsgemäßen Verfahrens.

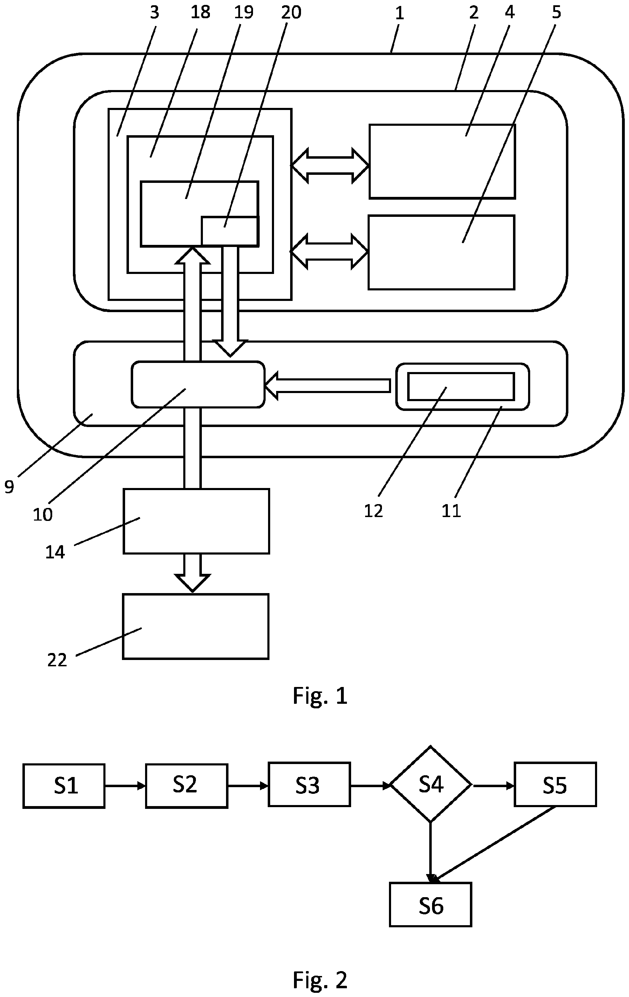

Der in Figur 1 dargestellte Smart Meter Gateway 1 hat ein Target of Evaluation 2, das einen Prozessor 3, der mit einem Arbeitsspeicher 4 und einem Flashspeicher 5 zusammenwirkt, umfasst. Über eine Interfacemanager Software 8, die eine Ausführung von Kommandos nur aus dem Target of Evaluation 2 heraus erlaubt, kann das Modem 10 eines Mobilfunkmoduls 9 konfiguriert werden, so dass es vom Smart Meter Gateway eigenständig in einen betriebsbereiten Zustand versetzt werden kann.

Der Prozessor 3 wirkt ferner mit dem Arbeitsspeicher 4 und dem Flashspeicher 5 zusammen, um auf einem Betriebssystem 18 außer der Interfacemanager Software 8 eine Applikations-Software 19 zu betreiben, mit der insbesondere Messdaten, insbesondere von Geräten aus einem lokalen metrologischen Netz, ausgelesen werden und ein verschlüsselter Kommunikationskanal über Modem und Mobilfunknetz etabliert wird. Über diesen Kanal werden dann die Messwerte und Schaltbefehle an den autorisierten Empfänger über das Mobilfunkmodul 9, dessen Modem 10 und das Mobilfunknetz 14 an den Backend Server 22 weitergeleitet und dadurch die mit der Applikations-Software 19 ausgelesenen Messdaten über den verschlüsselten Kommunikationskanal an den autorisierten Empfänger weiterleitet. Um dies zu tun, muss natürlich das Modem 10 konfiguriert sein.

Das Mobilfunkmodul 9 weist außer dem Modem 10 ein eingebettetes System (embedded system) 11 auf, auf dem ein Netzwerkmanagement-Client 12 ausgeführt wird, wobei ein Standard-Netzwerkmanagement-Protokoll wie z.B. SNMP oder LwM2M implementiert wird. Auch der Netzwerkmanagement-Client 12 kann das Modem 10 konfigurieren.

Der in Figur 2 schematisch als Blockbild dargestellte Ablauf beim Betrieb eines solchen Smart Meter Gateways 1 beginnt mit dem Starten des Smart Meter Gateways 1 im Schritt S1, wobei im Rahmen des Startprozesses insbesondere auch das Modem 10 aktiviert und der Interface-Manager 20 gestartet wird.

Nach der Aktivierung bzw. dem Start wartet der Interfacemanager 20 im Schritt S2 zunächst eine definierte Zeitspanne ab, ehe im Schritt S3 mit einem reinen Lesebefehl die Konfiguration vom Modem 10 mittels eines AT-Befehls abgerufen wird und im Schritt S4 geprüft wird, ob ein Parameter, der nur bei einer Konfiguration des Modems 10 durch den Netzwerkmanagement-Client gesetzt wird, gesetzt ist oder nicht. Ist dies der Fall, so geht der Interfacemanager 20 unmittelbar zum Schritt S6, dem regulären Applikations-Betrieb weiter, ohne selbst irgendeine Konfigurationsoperation am Modem 10 vorzunehmen. Ist dies nicht der Fall, wird zunächst im Schritt S5 die Konfiguration des Modems 10 durch den Interfacemanager 20 vorgenommen, ehe zum Schritt S6, dem regulären Applikations-Betrieb übergegangen wird, und zwar auch dann, wenn der Interfacemanager 20 bei einer früheren Aktivierung des Smart Meter Gateways 1 bereits die Konfiguration durchgeführt hat.

### Bezugszeichenliste

- 1: Smart Meter Gateway
- 2: Target of Evaluation
- 3: Prozessor
- 4: Arbeitsspeicher
- 5: Flashspeicher
- 9: Mobilfunkmodul
- 10: Modem
- 11: eingebettetes System
- 12: Netzwerkmanagement-Client
- 14: Mobilfunknetz
- 18: Betriebssystem
- 19: Applikations-Software
- 20: Interfacemanager
- 22: Metering Server
- S1-S6: Verfahrensschritte

## Patentansprüche

1. Verfahren zum Betrieb eines Smart Meter Gateways (1) mit Mobilfunkmodul (9), wobei das Mobilfunkmodul (9) ein Modem (10) und ein eingebettetes System (11) aufweist, das zum Betrieb eines Netzwerkmanagement-Clients (12) eingerichtet ist, mit welchem das Modem konfiguriert werden kann, und wobei der Smart Meter Gateway (1) einen Prozessor (3), der mit einem Arbeitsspeicher(4) und/oder einem Flashspeicher (5) zusammenwirkt aufweist, um auf einem Betriebssystem (18) eine Applikations-Software (19) zu betreiben, mit der insbesondere Messdaten ausgelesen werden und ein verschlüsselter Kommunikationskanal über Modem (10) und Mobilfunknetz etabliert wird, über den die Messwerte und Schaltbefehle übertragen und so über den verschlüsselten Kommunikationskanal an den autorisierten Empfänger weitergeleitet werden,
wobei auf dem Betriebssystem (18) ferner zumindest zeitweise ein Interfacemanager (20) betrieben wird, mit dem das Modem (10) konfiguriert werden kann,
**dadurch gekennzeichnet, dass** der Interfacemanager (20) ehe er das Modem (10) konfiguriert überprüft, ob das Modem (10) bereits vom Netzwerkmanagement-Client (12) konfiguriert wurde und nur dann das Modem (10) konfiguriert, wenn dies nicht der Fall ist.

2. Verfahren nach Anspruch 1,
**dadurch gekennzeichnet, dass** der Netzwerkmanager-Client (12) bei der Konfiguration des Modems (10) einen charakteristischen Parameter setzt und dass der Interfacemanager (20) prüft, ob dieser charakteristische Parameter gesetzt ist.

3. Verfahren nach Anspruch 1 oder 2,
**dadurch gekennzeichnet, dass** die Überprüfung, ob das Modem (10) bereits vom Netzwerkmanagement-Client (12) konfiguriert wurde, einen Abruf der Konfiguration des Modems (10) mit einem AT-Befehl, der ein reiner Lesebefehl ist, umfasst.

4. Verfahren nach einem der Ansprüche 1 bis 3,
**dadurch gekennzeichnet, dass** der Interfacemanager (20) nach der Aktivierung des Modems (10) eine vorgegebene Zeit wartet, ehe die Überprüfung gestartet wird.
